# EUROPEAN PATENT APPLICATION

(11) **EP 3 076 400 A1**
(43) Date of publication of application: **05.10.2016**
(21) Application number: 14866478.2
(22) Date of filing: 21.11.2014
(51) Int. Cl.: G21C 9/06

(54) **SYSTEM FOR PURIFYING A GASEOUS MEDIUM OF HYDROGEN AND METHOD FOR THE USE THEREOF**

(30) Priority: 26.11.2013 RU 2013152258; 10.12.2013 RU 2013154534
(71) Applicant: Joint Stock Company "Akme-Engineering", Moscow 115035 (RU)
(72) Inventor: MARTYNOV, Petr Nikiforovich, Kaluzhskaya obl., Obninsk 249030 (RU); ASKHADULLIN, Radomir Shamilievich, Kaluzhskaya obl., Obninsk 249030 (RU); IVANOV, Konstantin Dmitrievich, Kaluzhskaya obl., Obninsk 249030 (RU); NIYAZOV, Said-Ali Sabirovich, Borovsk, Kaluzhskaya obl. 249013 (RU)
(74) Representative: Mitev, Mitko Karushkov
(86) International application number: PCT/RU2014/000883
(87) International publication number: WO 2015/080627

(57) **Abstract**

Disclosed is a hydrogen igniter for igniting hydrogen contained in a gaseous medium, said hydrogen igniter comprising a housing with openings for the supply and discharge of a gaseous medium, and a filler in the form of bismuth oxide and/or lead oxide, disposed inside the housing. Also disclosed are a system for purifying a gaseous medium of hydrogen having such a hydrogen igniter, and a method for the repeated use of such a system. The igniter and the system can be used in a nuclear reactor facility

## Description

### Field of the invention

This invention relates to systems and devices of gas filling dehydrogenation, particularly to hydrogen recombiners.

### Related art

One of the problems of ensuring safe operation of nuclear reactor is gaseous hydrogen removal from the nuclear reactor gas circuits, as gaseous hydrogen accumulation can lead to dangerous gaseous hydrogen concentration ant it can cause undesirable interaction of hydrogen with construction materials that leads to degradation of these materials (first of all, protective oxide film on the external surface of the circuit elements). Besides, accumulation of hydrogen in gas circuits predetermines explosive concentrations of gaseous hydrogen.

Different methods can be used to eliminate gaseous hydrogen from gas circuits.

Patent RU2430876 discloses a device for hydrogen extraction from hydrogenous gas filling. Hydrogen diffusion through permeable membrane is taken as a basis of this device operation. As a result, pure hydrogen is collected in the space behind the membrane, the remaining operating medium with reduced contents of hydrogen is transferred to the outlet nozzle. The efficiency of this scheme is low when it is necessary to eliminate gaseous hydrogen from gaseous mixture with low hydrogen contents, as it requires extended time for hydrogen to diffuse through the membrane, large area of permeable membrane is required as well.

Patent US6356613 discloses another device for hydrogen extraction from hydrogenous gas filling. In this device gas mixture containing gaseous hydrogen flows through a catalyst package where low temperature oxidation of gaseous hydrogen to water takes place; the processed gas mixture is transferred outside the device. Oxidation of hydrogen to water (water steam) provides an opportunity of quick and effective elimination of hydrogen from gas circuits, as oxidized hydrogen (water, water steam) can be easily removed from gas circuit by means of a well-proven technology of gaseous media drainage. However, this device can be used only in gas medium containing oxygen. If oxygen-free gas filling is processed, this device cannot dehydrogenate oxygen-free gas filling.

Oxygen-free gaseous media are used in gas circuits of reactors with heavy liquid-metal coolant, so it is necessary to develop effective means of removal of hydrogen and similar gases from oxygen-free gas filling of gas circuits.

For nuclear reactor plant operation, it is also necessary to eliminate hydrogen from shielding gas, which is commonly an inert gas, in order to maintain the required impurity composition of the shielding gas (gas filling). Removal of hydrogen from the shielding gas can be achieved by means of a hydrogen recombiner.

Patent RU2253915 discloses a hydrogen recombiner that contains copper oxide and is designed so that inert gas (gas filling) containing hydrogen is able to flow through it. Hydrogen is oxidized to water in copper oxide, and water is entrained by the inert gas flow.

Shielding gas contamination with copper impurities or copper oxide is possible during dehydrogenation process of gas filling (shielding gas) using this recombiner. Such impurities can adversely affect construction materials of the reactor plant and coolant, for example, they can contaminate it.

As the water formed during hydrogen oxidation in copper oxide is not removed from gas filling flow, the shielding gas filling is saturated with water steam, the concentration of which can exceed an admissible value.

Besides, as hydrogen recombination is performed during the reaction of copper oxide reduction to copper, the copper should be removed and fresh copper oxide should be placed in the recombiner after all effective copper oxide is reduced to copper during operation of the recombiner.

It is also necessary to mention relatively low efficiency of hydrogen recombiner based on copper oxide.

### Summary of the invention

The objective of this invention is to build a hydrogen recombiner that will not contaminate gas filling (for example, shielding gas) with impurities, harmful for a reactor plant construction materials and/or coolant, in particular, lead-bismuth coolant. An additional objective of this invention is to increase the efficiency of hydrogen recombiner. Another additional objective of this invention is to eliminate water steam produced during hydrogen recombination from gas filling that have passed through hydrogen recombiner manufactured in accordance with this invention.

Besides, the objective of this invention is to design a system of gas filling dehydrogenation by means of its recombination that will not contaminate gas filling (for example, shielding gas) with impurities, harmful for a reactor plant construction materials and/or coolant, in particular, lead-bismuth coolant. One more objective of this invention is to ensure extended operation of the system without the need to replace/recharge the substance used for hydrogen recombination.

The objective of this invention is achieved by means of a recombiner for hydrogen contained in gas filling that includes housing with openings for gas filling inlet and removal and filler containing bismuth and/or lead oxide placed in the housing. One version of the invention assumes that bismuth oxide appears to be Bi₂0₃, and filler is preferable to have granulated form.

At least one reaction vessel with filler inside can be located inside the recombiner housing. The housing of the preferred design version also contains a distribution pipe that runs from the inlet through at least one reaction vessel; the preferred design is the distribution pipe with openings in its side walls in the areas where it passes through reaction vessels. Besides, it is preferred that at least one reaction vessel has openings for inlet and outlet of gas filling.

Recombiner housing can be equipped with a heater. The housing of the preferred design version has a bottom, a cover and side walls, while the inlet for gas filling is made in the cover, and the outlet for gas filling is made in the bottom, and heater is installed at the side wall of the housing.

The objective of this invention is also achieved by the gas filling dehydrogenation gas filling dehydrogenation system, that contains any of the above mentioned versions of a recombiner, inlet pipeline connected with the hydrogen recombiner housing with a capability of gas filling supply to the gas filling inlet, exhaust pipeline connected with the hydrogen recombiner housing with a capability of gas filling exhaust from the gas filling outlet, isolation valves installed at the inlet pipeline with a capability to control the supply of hydrogenous gas filling, and isolation valves installed at the inlet pipeline with a capability to control the supply of oxygen-bearing gas filling.

The inlet pipeline can be equipped with a heater. The gas filling that flows through the recombiner should preferably contain an inert gas.

The preferred design version of the system also includes a cooler and a condenser, while the hydrogen recombiner housing and the cooler are connected with outlet pipe with a gas extraction to cooler and condenser.

The system can include isolation valves installed at the outlet pipe with a capability to control the exhaust of gas filling.

A reactor facility that contains any of the above mentioned versions of a hydrogen recombiner or a gas filling dehydrogenation system made in accordance with any of the above mentioned versions also helps to achieve the objectives of this invention. The preferred design of the system the reactor unit should be nuclear and the coolant should preferably be a lead-bismuth coolant.

The objective of this invention is also solved by the method of repeated operation of the gas filling dehydrogenation system with a hydrogen recombiner that includes housing with openings for gas filling inlet and removal and a filler that contains oxygen, inlet pipeline connected with the hydrogen recombiner housing with possibility of gas filling supply to the gas filling inlet opening, exhaust pipeline connected with the hydrogen recombiner housing with possibility of gas filling exhaust from the gas filling outlet opening, isolation valves installed at the inlet pipeline with possibility to control the supply of hydrogenous gas filling, and isolation valves installed at the inlet pipeline with possibility to control the supply of oxygen-bearing gas filling.

The method includes the following steps: supply of hydrogenous gas filling to the recombiner, cutting off supply of hydrogenous gas filling to the recombiner, supply of oxygen-bearing gas filling to the recombiner, cutting of supply of oxygen-bearing gas filling to the recombiner. When the hydrogenous gas filling is supplied to the hydrogen recombiner, the hydrogenous gas filling from the hydrogen recombiner can be extracted. When the oxygen-bearing gas filling is supplied to the hydrogen recombiner, the supplied oxygen-bearing gas filling can be retained in the hydrogen recombiner, and upon completion of bismuth and/or bismuth oxide oxidation cycle the gas filling that contains or contained oxygen can be withdrawn.

Oxygen-bearing filler of the preferred design version contains metal oxide. This can be bismuth oxide BiO and/or Bi₂0₃ and/or lead oxide. oxygen-bearing filler should preferably be of granulated form.

At least one reaction vessel with oxygen-bearing filler should preferably be located inside the recombiner housing. Besides, the housing can also contain a distribution pipe that goes from the inlet through at least one reaction vessel; it should preferably have openings in its side walls where it passes through reaction vessels. At least one reaction vessel can also have openings for inlet and outlet of gas filling.

The housing can be equipped with a heater. The housing of the preferred design version has a bottom, a cover and side walls, while the inlet for gas filling is made in the cover, and the outlet opening for gas filling is made in the bottom, and heater is installed at the side wall of the housing. The inlet pipe can be equipped with a heater. The gas filling should preferably contain inert gas.

The system can additionally include a cooler and a condenser, where the hydrogen recombiner housing and the cooler can be connected to the outlet pipe with a gas filling extraction branch to cooler and condenser.

In the preferred design version, the system includes isolation valves installed at the exhaust pipeline with a means to control the extraction of the gas filling.

This invention proposes a hydrogen recombiner and a system of gas filling purification that ensure such technical result as absence of gas filling contamination with impurities, harmful for reactor plant construction materials and/or coolant, in particular, lead-bismuth coolant. It helps to increase structural reliability of the reactor where such recombiner and/or gas purification system are used as well as the safety of such reactor.

Besides, with this invention we achieved managed to increase hydrogen recombiner's efficiency, that provides an opportunity to reduce weight-and-dimensional characteristics of the hydrogen recombiner and the units where it is used, as well as to reduce costs.

This invention also ensures technical result that involves an increase of the service life of the gas system dehydrogenation system without the need to replace/recharge the substance used for hydrogen recombination and eliminates the necessity of replacement/recharging operations, all this results in reduction of operational costs, both labor and financial costs.

This invention has also achieved the technical result which means removal of water steam, produced during hydrogen recombination, from the gas filling that have passed through hydrogen recombiner manufactured in accordance with this invention. It increases the reliability of operation of the devices where gas filling is used, it also increases service life of gas filling itself that reduces labor costs for its replacement and improves financial indicators due to the reduction of financial expenses for gas filling replacement.

### Brief description of drawings

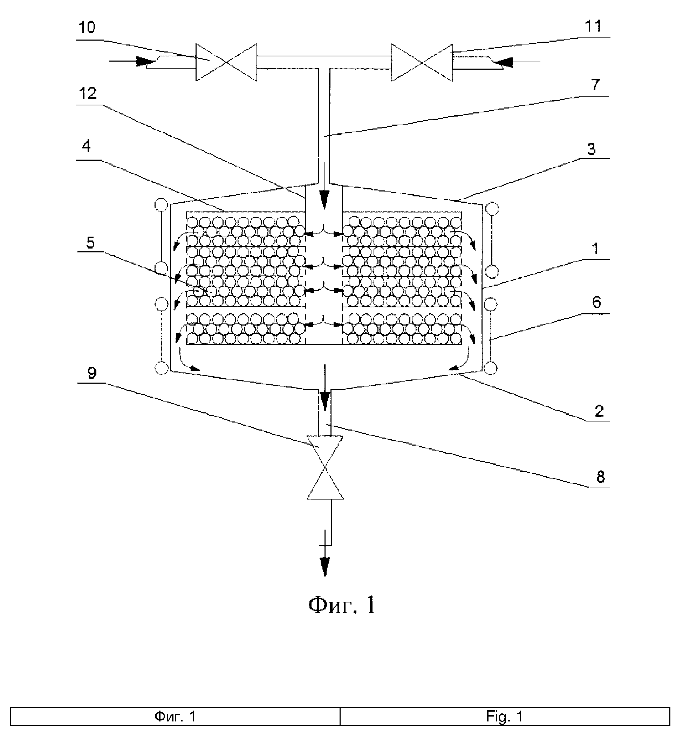

Fig. 1 represents a hydrogen recombiner built in accordance with this invention with pipelines for gas filling supply and withdrawal, and isolation valves to control gas filling supply and withdrawal.

### Embodiment

This invention discloses a recombiner of hydrogen being a part of gas filling that usually includes an inert gas, for example, helium, neon, argon, krypton, xenon and/or radon. Use of an inert gas as a major component of gas filling inceases the recombiner efficiency and reduces filler consumption, as the recombiner will recombine only impurities (in particular, hydrogen), and there will be no interaction with inert gases due to their chemical properties. Use of an inert gas reduces influence to construction materials of the recombiner, such as housing etc. that increases its service life and reduces expenses for its maintenance.

The recombiner consists of a housing with inlets and outlets for gas filling and filler that contains bismuth and/or lead oxide located in the housing. If the housing contains bismuth and/or lead not as an oxide, but as a metal, for example, such design can be treated as one of the versions of this invention, as bismuth oxide can be easily obtained from metallic bismuth and lead oxide can be easily obtained from metallic lead when oxygen from oxygen-bearing gas filling passes through the recombiner. Thanks to application of metal, filler can remain in concentrated form and not evaporate to gas filling. Different kinds of metals that ensure oxidation-reduction reactions behaviour in preset conditions can be used as a metal included to a metal oxide, for example, copper. However, if hydrogen recombiner is used as a part of a nuclear power plant with lead-bismuth filler, it is preferred to use bismuth or lead (i e. Bi2O3, BiO or PbO oxides).

The recombiner housing includes a filler which can be bismuth and/or lead oxide in accordance with the invention. As bismuth and lead are heavier metals than copper, we managed to reduce contamination of gas filling passing through bismuth and/or lead oxide, as heavier atoms and their compounds are less exposed to carryover by gas filling. Besides, in case the recombiner is used in the gas filling dehydrogenation system, that is used, for example, in a nuclear reactor with lead-bismuth coolant, the presence of bismuth and lead in gas filling will not be treated as the coolant contamination. Besides, the coolant itself will not contaminate the recombiner filler via the gas filling. It allows increasing service life of coolant and of recombiner filler as well.

Principle of the recombiner operation is mostly based on the chemical reaction of partial reduction of bismuth oxide Bi₂O₃ to BiO with formation of water steam:

Bi₂O₃ + H₂ -» 2BiO + H₂0.

Use of bismuth oxide instead of copper oxide increases efficiency of recombination, however, use of bismuth oxide partial reduction reaction allows additional increasing of recombination efficiency. So, it is preferable to have Bi₂0₃, but not BiO in the recombiner, as presence of the first oxide allows performing chemical reaction of partial reduction, and if the second oxide is present, the full reduction reaction with formation of metallic bismuth will take place.

The filler that has already reacted can be oxidized by means of the recombiner feeding with oxygen in order to use the recombiner without filler replacement; at that the following reaction takes place:

2BiO + 0.5O₂ -> Bi₂O₃.

It allows ensuring practical reversibility of the process, consequently, long operation life of the recombiner without oxide filler replacement. If pure bismuth was formed, BiO will be firstly formed during reaction with oxygen, then Bi2O3 will be formed.

In accordance with this invention the operation of the gas filling dehydrogenation system is mostly performed in a repeated form, where the following operations are cycled:
- the hydrogenous gas filling is fed to the recombiner (it is preferable that the gas filling that has already reacted with the filler and contains water steam would be removed from the recombiner, it allows to carry out gas filling supply in a continuous mode, that allows increasing efficiency and recombination rate in comparison with an alternate hydrogenous gas filling supply/removal mode);
- the supply of hydrogenous gas filling to the recombiner is stopped, this can happen, for example, either when a drop of hydrogen recombination efficiency is determined or in accordance with the recombiner conditioning schedule;
- the recombiner is supplied with oxygen-bearing gas filling for filler conditioning, i. e. its oxidizing;
- the supply of hydrogenous gas filling to the recombiner is stopped.

In the preferred design version, the fed oxygen-bearing gas filling is retained in the recombiner, i. e. not removed, this helps to reduce oxygen-bearing gas filling consumption, increase the efficiency of its use and reduce or eliminate the impact of oxygen on the equipment located downstream the isolation valve (faucet) 9, for example, to cooler and/or condenser. Upon completion of bismuth and/or bismuth oxide filler oxidation cycle, the gas filling that contains or contained oxygen is mainly removed, it helps to decrease the risk of direct interaction of oxygen remaining in the gas filling with hydrogen from fresh gas filling; this interaction can be explosive.

The operation cycles described above can be repeated many times, this ensures multiple usage of the same filler; this increases the recombiner service life due to absence of assembling/disassembling operations and reduces labor and financial costs for filler replacement.

Application of this cycle also facilitates maintaining of more efficient reaction of partial reduction in the recombiner as described above, because if the concentration of bismuth oxide BiO in filler reaches a certain value, it can be oxidized until the initial Bi₂0₃ oxide, thus preventing full reduction of bismuth oxide BiO to metallic Bi.

Granular form of the filler such as beads supports partial reduction that ensures higher efficiency. It helps to prevent filler sintering, thus increases the filler operation life. Granular form of the filler ensures fabricability of the filler and the ease of handling at all steps filler loading and removal from the recombiner housing; it reduces labor costs and recombination expenses as a whole, increases the convenience of the recombiner maintenance operations. Besides, granular form of the filler ensures bigger area of interaction of bismuth oxide and hydrogen (oxygen), thus higher efficiency of the process is ensured, as granulated filler will have spaces between grains and gas filling can pass through these spaces; if grains are made as beads, these spaces will have guaranteed and the largest size.

Fig. 1 represents the preferred design version of the gas filling dehydrogenation system in accordance with this invention that includes a recombiner with pipelines for gas filling inlet and outlet, and isolation valves to control gas filling inlet and outlet.

The recombiner housing shown on Fig. 1 consists of a side wall 1, bottom 2 and cover 3. A version of the recombiner embodiment shown on Fig. 1 includes housing made as a special device aimed to perform its functions. However, recombiner housing can be formed by the housing elements of other units, for example, when the filler is located in the space between housings of the units being parts of the gas filling dehydrogenation system or the reactor plant.

Recombiner housing can be made of metallic, composite or polymeric materials that ensure adequate mechanical strength, temperature stability, chemical resistance to gas filling and filler (bismuth oxide) and absence or insignificant deposits which can contaminate gas filling. In the preferred design version the housing is made of steel. The housing is mostly made leak-proof, so that the gas filling that passes through inlet could go escape only through the opening for gas filling removal. In this case better interaction between gas filling and filler and more effective hydrogen recombination is achieved; at the same time there are no leakages to external medium; thereby safety of the recombiner operation increases and environment contamination decreases.

There is an opening in the cover 3 for gas filling inlet, gas filling is supplied into the recombiner through this opening from inlet pipeline 7 connected with hydrogen recombiner housing with possibility of gas filling supply to the gas filling inlet opening in order to implement recombination process. There is an opening in the bottom 2 for gas filling outlet, gas filling is removed from the recombiner through this opening to outlet pipeline 8 connected with hydrogen recombiner housing with possibility of gas filling exhaust from the gas filling outlet opening in order to implement recombination process in continuous flow of gas filling.

The openings shown on Fig. 1 are made in the housing cover and bottom and have relatively small area, however, in other versions opening size can be much bigger resulting in recombiner having no cover and bottom, and gas filling is supplied and removed through the area of the whole housing. This version of the housing version is also included in the scope of this invention. In some versions the outlet openings can be missing, however it does not decrease the recombiner operation efficiency as the outlet openings help to increase effectiveness of recombiner's operation in continuous flow of gas filling. In other embodiments outlet opening can be located near inlet opening or different parts of the same opening can be used for gas filling inlet and outlet; this version of openings embodiment is also included in the scope of this invention.

Inlet and outlet pipes can be attached to the housing by means of welding or any other by any other means known at current state of the art that ensure adequate mechanical, thermal and chemical strength and do not contaminate gas filling or filler. Rather leak-proof coupling of pipelines to housing allows lossless gas filling supply to the recombiner. Pipelines can be partially or fully made as a whole with the recombiner housing at the stage of the housing manufacturing, for example, as sections of tubes coming from the openings for connection with pipelines. These versions permit to simplify the recombiner coupling with pipelines and are included to the breadth of protection of this invention.

In the version shown on Fig. 1 isolation valves 10 to control the supply of hydrogenous gas filling and isolation valves 11 to control the supply of oxygen-bearing gas filling are installed on the inlet pipeline. Isolation valves 9 can be installed on the outlet pipeline 8 to control the exhaust of gas filling. Isolation valves 9-11 can be, for example, gas valves and can be used to implement the above mentioned method of repeated operation of the hydrogen recombiner. The inlet pipeline can include a T-connector (splitter) to which the inlet pipeline for hydrogenous gas filling supply and inlet pipeline for oxygen-bearing gas filling supply (they can also be treated as entering the inlet pipeline) are connected. Isolation valves 10 and 11 can be installed on the pipeline for hydrogenous gas filling supply and pipeline for oxygen-bearing gas filling supply correspondingly.

Isolation valve 10 must be open for hydrogenous gas filling supply, isolation valve 9 must be also open to provide gas filling flow. Isolation valve 10 must be closed in order to stop hydrogenous gas filling supply. Gas filling withdrawal through outlet pipeline can be stopped simultaneously or after gas filling supply through isolation valve 10 by means of closing isolation valve 9. oxygen-bearing gas filling supply and exhaust is mostly carried out through isolation valve 11 that must be open for this purpose. At the same time the isolation valve 9 is closed, however the version, when filler oxidizing is performed in the continuous flow of gas filling, is possible, for that isolation valve 9 must be open. After oxygen-bearing gas filling supply is stopped and after it is removed, isolation valve 11 can be closed.

Oxygen-bearing filler 5 can include oxygen compounds, for example, acids, oxides, peroxides, ozonides, etc. preferably in solid or liquid form. oxygen-bearing filler of the preferred design version is accomplished as a metal oxide, as oxygen-bearing material in this form is usually solid, and when oxygen is used for hydrogen recombination (reduction of the metal included to the oxide), result of the reaction is also usually a solid substance, but not liquid or gaseous; it allows retaining the filler in the housing without taking any additional measures for subsequent filler saturation with oxygen (in case of metal oxide - metal oxidizing). Besides, solid filler simplifies its handling, as in this case it can be made as grains that can be easily moved, retained and pass gas filling through.

At the same time oxygen-bearing filler can have liquid form, in this case additional measures to support the reaction between gaseous environment and filler are required, for example, gas filling transmission through liquid oxygen-bearing filler.

Filler 5 that represents bismuth oxide can be located in hydrogen recombiner housing, for example on its bottom 2, however, in the preferred design version of this invention bismuth oxide 5, for example, in granular form, is located in one or more reaction vessels (baskets) 4. It allows increasing fabricability and maintainability of the recombiner, as firstly filler 5 can be located in reaction vessels 4, and vessels 4 can be located in the recombiner housing; it eliminates the necessity to perform a more labor-intensive operation of filler placement directly inside the housing. Besides, use of reaction vessels allows increasing efficiency of use of housing space by means of realization of several levels of filler placement.

As shown on Fig. 1, in preferred design version of the invention the housing contains a distribution pipe 12 that goes from gas filling supply opening in cover 3 through at least one reaction vessel 4. The distribution pipe can deliver gas filling to reaction vessel that is located behind the vessel which it passes through, for example for supply from the end of the tube, however, in the preferred design version the distribution tube has openings in its side walls in the areas where it passes through reaction vessels; it allows increasing of the efficiency of gas filling supply by means of its distribution among all reaction vessels.

If several levels of reaction vessels are available, as shown on Fig. 1, the distribution tube can have an open port through which gas filling comes directly to a lower reaction vessel or passes to the bottom of a lower reaction vessel, where it can be sealed by the bottom of the vessel or a special cap, in this case gas filling can enter the lower reaction vessel through side openings of the distribution tube. It contributes to more complete passing of gas filling through reaction vessels and filler, as a result hydrogen recombiner efficiency increases, as gas filling cannot come to outlet opening aside the filler without reacting with it.

Reaction vessels 4 mostly have openings for inlet and outlet of gas filling. In case the vessels 4 are located in several levels and distribution pipe 12 passes through them, for example, in the center of the vessels, as it is shown on Fig. 1, gas filling will most effectively pass through the filler that is located between bottom elements of the vessels (the filler in the upper vessel is located between the vessel bottom and recombiner cover), and leave through side surfaces of the vessels, for example, to the vessels 4 periphery to the wall of the housing 1, from where it will descend to the gas filling outlet opening in the bottom 2 as it is shown on Fig. 1. The recombiner structure shown on Fig. 1 is optimal from the point of view of the organization of gas medium flow in order to increase the efficiency of hydrogen recombination at filler and ensuring maximum possible uniformity of initial metal transformation, and if the metal used in oxide is bismuth, the recombiner structure permits to reduce or eliminate transformation of BiO to metallic Bi be means of keeping the reaction in frames of partial reduction of Bi2O3 to BiO.

It is possible to improve recombination efficiency further by means of temperature increase of gas filling and/or filler and/or reaction vessels and/or housing up to 500 °C. It can be made by means of location of heater 6, containing one or more sections, to the housing, for example, to its side wall 1, as it is shown on Fig. 1. The heater can be either electric or of other type. Heated housing will heat gas filling, filler will also be heated through gas filling and/or through distribution pipe and reaction vessels.

In some cases, it is useful to install a heater to inlet pipeline for preliminary heating of gas filling that is supplied to the recombiner housing; it allows supplying pre-heated gas filling, so there is no need to heat the gas inside the housing, as a result hydrogen recombination starts directly after gas filling is fed to filler in the housing, it increases the recombiner efficiency.

As a result of hydrogen recombination water steam is formed which is removed from the recombiner together with gas filling. In some cases water steam is an undesirable impurity and gas filling should be purified from it. For this purpose the gas filling dehydrogenation system can include cooler, condenser and outlet pipeline besides hydrogen recombiner, at that the outlet pipeline is connected with hydrogen recombiner housing and the cooler with possibility to exhaust gas filling from outlet opening to cooler and condenser.

The cooler chills the gas filling causing water steam condense in the condenser, the gas filling freely escapes the cooler and the condenser and can be used as intended again in purified form. The cooler can be combined with the condenser or they can be two separate units installed in series and connected by a pipe that can be treated as a part of the outlet pipeline, or without a pipe. Besides the additional removal of water steam from the gas filling, the cooler can decrease gas filling temperature, for example, after heating down to the operating temperature in the recombiner.

The hydrogen recombiner and the gas filling dehydrogenation system that includes hydrogen recombiner in accordance with the invention, described above, can be used for dehydrogenation of gas filling, for example, in reactor unit that can be nuclear and where lead-bismuth coolant is used as a coolant. Application of hydrogen recombiner that contains bismuth and/or lead oxide as filler ensures minimum contamination of lead-bismuth coolant in such nuclear reactor plant.

This invention can also be represented as a unit for hydrogen removal from oxygen-free gaseous media, that is able to remove gaseous hydrogen effectively by means of chemical reaction of hydrogen oxidizing to water with subsequent water removal as a part of steam-gas mixture without using permeable membranes with the device properties restoration without its disassembly.

The unit for gaseous hydrogen removal from oxygen-free gaseous media includes a leak-proof heated housing, a reaction chamber with oxygen-bearing filler placed inside it, system of delivery of oxygen-free hydrogenous gas filling to be processed to the reaction chamber, system of removal of the processed gas filling from the reaction chamber, the system of restoration of oxidizing properties of the oxygen-bearing substance and the system of the device operation modes switching. A permeable distribution collector (distribution pipeline) and reaction chamber that encloses the distribution pipeline can be placed inside the housing.

The reaction chamber has at least one perforated section with oxygen-bearing substance, and openings are made in the baffle separating adjacent perforated sections. Preferably, the reaction chamber has several perforated sections placed one upon another, filled with grains of oxygen-bearing substance, preferably, bismuth oxide. The reaction chamber is placed in the housing with a gap against its side wall, cover and/or bottom.

There can be openings made in the side wall of the reaction chamber; they ensure connection of perforated sections with oxygen-bearing substance with the housing space. Perforation size preferably prevents solid bismuth oxide grains from free leaving the reaction chamber sections.

The oxygen-free gas filling feeding system to the reaction chamber contains an inlet nozzle to which the distribution permeable collector is attached from one side, and the device for delivery of oxygen-free hydrogenous gas filling that will be processed is attached from the opposite side.

The distribution permeable collector is executed as a distribution pipeline and a reaction chamber that encloses the distribution pipeline.

The distribution pipeline section immersed into the reaction section (enclosed by the reaction chamber) is executed with perforated side wall, i.e. it has openings that join the distribution pipeline space with internal spaces of perforated sections of the reaction chamber with oxygen-bearing substance. There is an end cap in the lower end surface of the distribution pipeline that prevents leakage of the processed gas flow aside the reaction chamber. Side wall of the reaction chamber is perforated. The perforation connects the housing space with internal space of the reaction chamber. The sections are divided by baffles that are also perforated. The perforation ensures flowage of the reaction chamber in order to support gaseous working medium passing through it.

The inlet nozzle for delivery of gas filling to the device is connected to the distribution pipeline from above. The feeding pipe for hydrogenous oxygen-free gas filling as well as the pipeline for oxygen-bearing gas filling supply can be attached to the inlet nozzle outside the housing.

The system of processed gas filling removal from the reaction chamber can include from outlet pipeline for processed gas filling removal attached to the device housing, it is used for removal of the reacted gas filling - the gas filling with water steam that was formed in the reaction chamber as a result of reaction of gaseous hydrogen (methane or similar gases) with oxygen in the grains of oxygen-bearing filler.

The device operation is regulated by shut-off valves and temperature change of the heated housing, an electric heater is located on the outer surface of the housing for that purpose.

The device contains the device operation control tools that include three shut-off valves. The shut off valve is installed in the pipeline of the hydrogenous oxygen-free gas filling delivery system. The second shut off valve is installed in the pipeline of the oxygen-bearing gas filling delivery system. The third shut-off valve is installed in the outlet pipeline.

When hydrogen is being removed from oxygen-free gas filling the shut-off valve 11 is closed and the shut-off valves 10 and 9 are open. The hydrogenous gas filling flow reaches the distribution pipeline from pipeline 7 through open shut-off valve 10, and this flow goes to the reaction chamber sections through perforation in the distribution pipeline walls. The flow streams the grains of the oxygen-bearing substance, preferably bismuth oxide, in the reaction chamber, at that hydrogen reacts with oxygen from bismuth oxide, it is almost completely oxidized and water steam is formed. The gas mixture processed in the reaction chamber goes to the housing, to the space between the reaction chamber and the housing walls, through the reaction chamber wall perforation. Later on the processed gas filling with water steam is removed from the unit through the open shut-off valve 9. Water steam can be easily removed from the processed gas filling by different methods of water steam removal from gases.

If decrease of activity of oxygen-bearing substance located in the reaction chamber is detected, the grains oxidizing ability should be recovered in the reaction chamber using oxygen-bearing gas filling. When the grains are being oxidized with oxygen-bearing gas filling, the shut-off-valves 10 and 9 are closed, and the shut-off valve 11 is open. Oxygen-bearing gas filling is supplied to the device of hydrogen removal from oxygen-free gaseous media through the pipeline, the reaction chamber space and the housing space are filled with oxygen-bearing gas filling, this gas mixture is kept in the housing and in the reaction chamber until reaction with oxygen is completed. Oxygen interacts with the grains material, preferably bismuth, oxidizes it and bismuth oxide is formed. As soon as oxidizing ability of bismuth is restored, the remains of oxygen-bearing gas filling are removed from the device, the devices is switched to the mode of hydrogen removal from oxygen-free gas filling and hydrogen removal starts again.

It is preferred that grains of bismuth oxide (Bi203) are used as oxygen-bearing material.

Use of a filler that in the form of granular oxygen-bearing material for hydrogen removal facilitates removal of hydrogen from oxygen-free gas filling by means of direct chemical oxidation of gaseous hydrogen, where larger contact surface of gaseous hydrogen with oxygen-bearing equipment is ensured, that allows fast and effective hydrogen removal from gas filling even if it is completely oxygen-free. The device ensures restoration of oxidizing ability of grains by means of periodic exposure of oxygen-bearing gas filling. Monitoring of hydrogen oxidizing to water steam can be performed my any known means, monitoring is not discussed within this application.

Use of bismuth oxide grains excludes contamination of gas filling with foreign elements as bismuth is a part of a nuclear reactor liquid-metal coolant.

## Claims

1. A recombiner for the hydrogen, contained in gas filling, that includes housing with openings for inlets and outlets for the gas filling and filler containing bismuth and/or lead oxide located in the housing.

2. The recombiner per Item 1 distinguished by the presence of bismuth oxide which is Bi₂0₃.

3. The recombiner per Item 1 is distinguished by the granulated form of the filler.

4. The recombiner per Item 1 is distinguished by that at least one reaction vessel with filler is located inside the housing.

5. The recombiner per Item 1 is distinguished by that the housing contains a distribution pipe that goes from the inlet through at least one reaction vessel; at that the distribution pipe has openings in its side walls in the areas where it passes through reaction vessels.

6. The recombiner per Item 4 is distinguished by that at least one reaction vessel has openings for inlet and outlet of gas filling.

7. The recombiner per Item 1 **characterized in that** the housing is equipped with a heater.

8. Recombiner in accordance with claim 7, **characterized in that** the housing has a bottom, a cover and a side wall, at that an inlet opening for gas filling is made in the cover, at that an outlet opening for gas filling is made in the bottom, and heater is installed at the side wall of the housing.

9. The gas filling dehydrogenation system, that contains a recombiner made in accordance with any of the items 1-8, inlet pipeline connected with the hydrogen recombiner housing with possibility of gas filling supply to the gas filling inlet opening, exhaust pipeline connected with the hydrogen recombiner housing with possibility of gas filling exhaust from the gas filling outlet opening, isolation valves installed at the inlet pipeline with possibility to control the supply of hydrogenous gas filling, and isolation valves installed at the inlet pipeline with possibility to control the supply of oxygen-bearing gas filling.

10. The system in accordance with Item 9 **characterized in that** the inlet pipeline is equipped with a heater.

11. The system in accordance with claim 9 **characterized in that** gas filling includes an inert gas.

12. The system in accordance with claim 9 **characterized in that** the system additionally contains a cooler and a condenser, at that the hydrogen recombiner housing and the cooler are connected with outlet pipeline with possibility to exhaust gas filling from outlet opening to cooler and condenser.

13. The system in accordance with claim 9 **characterized in that** it contains isolation valves installed at the exhaust pipeline with possibility to control the exhaust of gas filling.

14. A reactor facility that contains a hydrogen recombiner made in accordance with any of the items 1-8 or a gas filling dehydrogenation system made in accordance with any of the items 9-13.

15. The reactor facility in accordance with claim 14 **characterized in that** it is nuclear.

16. The reactor facility in accordance with claim 15 **characterized in that** lead-bismuth coolant is used as a coolant of this facility.

17. The method of repeated operation of the gas filling dehydrogenation system with a hydrogen recombiner that includes housing with openings for gas filling inlet and removal and a filler that contains oxygen, inlet pipeline connected with the hydrogen recombiner housing with possibility of gas filling supply to the gas filling inlet opening, exhaust pipeline connected with the hydrogen recombiner housing with possibility of gas filling exhaust from the gas filling outlet opening, isolation valves installed at the inlet pipeline with possibility to control the supply of hydrogenous gas filling, and isolation valves installed at the inlet pipeline with possibility to control the supply of oxygen-bearing gas filling.
The method includes the following steps:
hydrogenous gas filling is supplied to the recombiner;
supply of hydrogenous gas filling to the recombiner stops, oxygen-bearing gas filling is supplied to the hydrogen recombiner;
supply of oxygen-bearing gas filling to the hydrogen recombiner stops.

18. The method in accordance with claim 17 **characterized in that** when hydrogenous gas filling is supplied to the hydrogen recombiner, gas filling exhaust from the hydrogen recombiner can be performed as well.

19. The method in accordance with claim 17 **characterized in that** when oxygen-bearing gas filling is supplied to the hydrogen recombiner, the supplied oxygen-bearing gas filling can be retained in the hydrogen recombiner and after the operation of bismuth and/or bismuth oxide oxidizing is over, gas filling that contains or contained oxygen can be exhausted.

20. The method in accordance with claim 17 **characterized in that** oxygen-bearing filler contains a metal oxide.

21. The method in accordance with claim 20 **characterized in that** the metal oxide can represent bismuth oxide BiO and/or Bi₂0₃ and or lead oxide.

22. The method in accordance with claim 17, **characterized in that** the oxygen-bearing filler has a granulated form.

23. The method in accordance with claim 17, **characterized in that** at least one reaction vessel with oxygen-bearing filler is located inside the recombiner housing.

24. The method in accordance with claim 23, **characterized in that** the housing contains a distribution pipe that goes from an inlet opening through at least one reaction vessel; at that the distribution pipe has openings in its side walls in the areas where it passes through reaction vessels.

25. The method in accordance with claim 23, **characterized in that** at least one reaction vessel has openings for inlet and outlet of gas filling.

26. The method in accordance with claim 17, **characterized in that** the housing is equipped with a heater.

27. The method in accordance with claim 26, **characterized in that** the housing has a bottom, a cover and a side wall, at that an inlet opening for gas filling is made in the cover, at that an outlet opening for gas filling is made in the bottom, and heater is installed at the side wall of the housing.

28. The method in accordance with claim 17 **characterized in that** the inlet pipeline is equipped with a heater.

29. The method in accordance with claim 17 **characterized in that** gas filling includes an inert gas.

30. The method in accordance with claim 17 **characterized in that** the system additionally contains a cooler and a condenser, at that the hydrogen recombiner housing and the cooler are connected with outlet pipeline with possibility to exhaust gas filling from outlet opening to cooler and condenser.

31. The method in accordance with claim 17 **characterized in that** the system contains isolation valves installed at the exhaust pipeline with possibility to control the exhaust of gas filling.
